# FASCICULE DE BREVET EUROPEEN

(11) **EP 1 273 908 B1**
(45) Date de publication et mention de la délivrance du brevet: **07.04.2004**
(21) Numéro de dépôt: 01810662.5
(22) Date de dépôt: 05.07.2001
(51) Int. Cl.: G01N 27/12

(54) **Capteur chimique de gaz**
Chemischer Gassensor
Chemical gas sensor

(43) Date de publication de la demande: 08.01.2003
(73) Titulaire: Microchemical Systems S.A., 2035 Corcelles (CH)
(72) Inventeur: Alepee, Christine, 2525 Le Landeron (CH); Fau, Pierre, 09100 La Tour de Crieu (FR)
(74) Mandataire: Gresset, Jean

(56) Documents cités:
- EP-A- 0 795 747
- WO-A-01/02844
- FR-A- 2 765 401

## Description

La présente invention se rapporte aux capteurs chimiques. Elle concerne, plus particulièrement, un capteur chimique de gaz à semi-conducteur.

Une description détaillée d'un capteur de ce type et de son procédé de fabrication est décrit, par exemple, dans le document PCT CH 00/00349. Il comporte, typiquement, un cadre en silicium monocristallin du type utilisé pour la fabrication des circuits intégrés, un corps de chauffe en silicium polycristallin rendu conducteur par dopage, disposé sur le cadre avec interposition d'une membrane diélectrique et un élément sensible d'oxyde métallique, par exemple, de l'oxyde d'étain, disposé sur le corps de chauffe avec interposition d'une couche isolante.

Le principe d'un tel capteur repose sur la capacité de l'oxyde métallique, porté à haute température (environ 400 °C) par le corps de chauffe, à adsorber certains gaz qui modifient ainsi sa résistivité. La variation résultante de la résistance de l'élément sensible fournit alors une indication de la quantité de gaz adsorbés et donc de leur concentration dans l'air ambiant.

Ces capteurs sont principalement destinés à constituer le coeur des systèmes de sécurité de plus en plus utilisés pour la détection dans l'air ambiant de gaz nocifs, tels que le monoxyde carbone, les oxydes d'azote, l'ozone, les hydrocarbures, ... tant dans le domaine domestique que dans l'industrie.

Les performances de tels capteurs (sensibilité, sélectivité, stabilité, durabilité, ...) sont principalement altérées du fait, d'une part, de la non homogénéité de la température de l'élément sensible et, d'autre part, de phénomènes de migration du silicium du corps de chauffe dans les pistes métalliques disposées à ses extrémités pour permettre de l'alimenter en énergie électrique.

Le document EP 97102670 propose de remédier à ces difficultés, d'une part, en donnant au corps de chauffe une forme rectangulaire suffisamment allongée pour que la température de ses contacts d'extrémités soit réduite et, d'autre part, en ménageant en son centre, sous l'élément sensible, une ouverture qui permet une bonne homogénéité de sa température.

La présente invention a pour but de fournir une structure de capteur qui, mieux encore que la solution décrite dans le document EP ci-dessus, réduit la température des contacts et améliore les conditions de chauffage de l'élément sensible.

De façon plus précise, l'invention concerne un capteur chimique de gaz à semi-conducteur, du type comportant:
- un cadre en matériau semi-conducteur, définissant une fenêtre rectangulaire ayant deux axes de symétrie orthogonaux,
- une couche diélectrique déposée sur cadre,
- une couche conductrice, formant corps de chauffe, déposée sur la couche diélectrique et percée d'une ouverture centrale;
- une couche isolante déposée sur la couche conductrice,
- un élément sensible déposé sur la couche isolante et recouvrant l'ouverture centrale de la couche conductrice, et
- deux pistes conductrices couplées aux extrémités respectives de la couche conductrice.

Selon l'invention, ce capteur est caractérisé en ce que ladite couche conductrice, possédant les mêmes axes de symétrie que la fenêtre du cadre, a la forme d'un papillon, avec une partie centrale comportant ladite ouverture et deux ailes latérales identiques allant en s'élargissant de la partie centrale pour se terminer à proximité du cadre.

Le capteur de l'invention présente encore les principales caractéristiques suivantes:
- la partie centrale est rectangulaire, sa largeur et sa longueur correspondant environ respectivement à la moitié de la largeur et de la longueur de la fenêtre;
- les extrémités des ailes ont une largeur sensiblement égale à la dimension correspondante de la fenêtre;
- les ailes se terminent soit au-dessus du cadre, soit au-dessus de la fenêtre mais toujours à proximité du cadre;
- la fenêtre a une longueur d'environ 1 mm et une largeur d'environ 0.75 mm;
- l'élément sensible couvre sensiblement la moitié de la surface de la partie centrale de la couche conductrice;
- les pistes conductrices s'étendent sur les extrémités respectives des ailes;
- l'ouverture centrale de la couche conductrice a la forme d'un carré d'environ 100 µm de côté;
- le cadre est en silicium monocristallin;
- la couche conductrice est en silicium polycristallin rendu conducteur par dopage;
- l'élément sensible est constitué d'une couche d'oxyde métallique sous la forme d'une poudre agglomérée à structure poreuse constituée de particules sphériques ayant un diamètre de l'ordre de 20 nm;
- l'élément sensible peut aussi être constitué d'une couche inférieure d'oxyde métallique formée de grains ayant une dimension moyenne comprise entre 100 nm et 1 µm et d'une couche supérieure couche d'oxyde métallique sous la forme d'une poudre agglomérée à structure poreuse constituée de particules sphériques ayant un diamètre de l'ordre de 20 nm;
- l'oxyde utilisé est, par exemple, le dioxyde d'étain.

D'autres caractéristiques et avantages de la présente invention ressortiront de la description qui va suivre, faite en regard du dessin annexé dans lequel:
- la figure 1 est une vue de dessus d'une première forme de réalisation avantageuse d'un capteur selon l'invention;
- les figures 2 et 3 sont des vues en coupe, respectivement selon XX et YY, du capteur de la figure 1; et
- la figure 4 est une vue de dessus d'une deuxième forme de réalisation avantageuse d'un capteur selon l'invention.

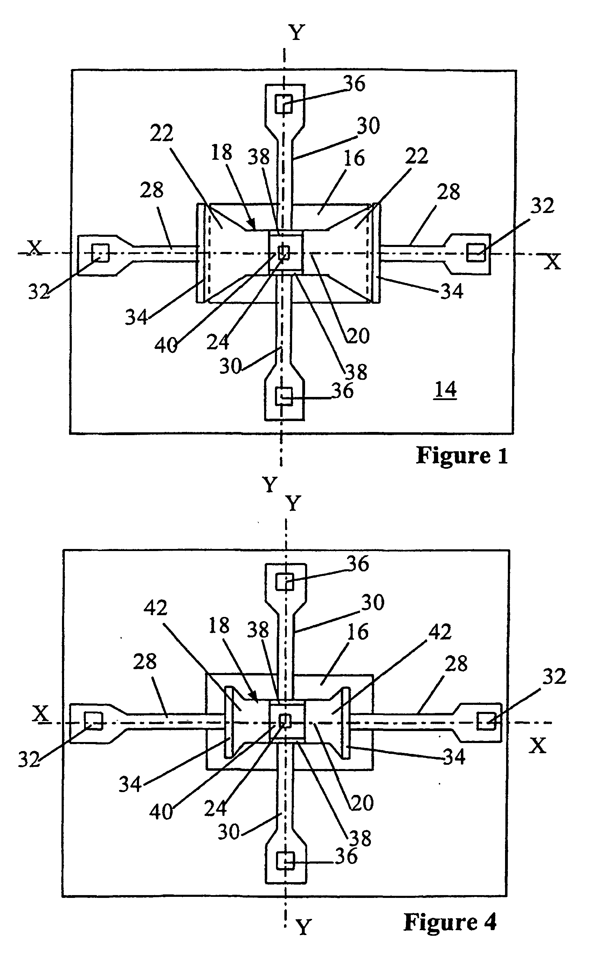

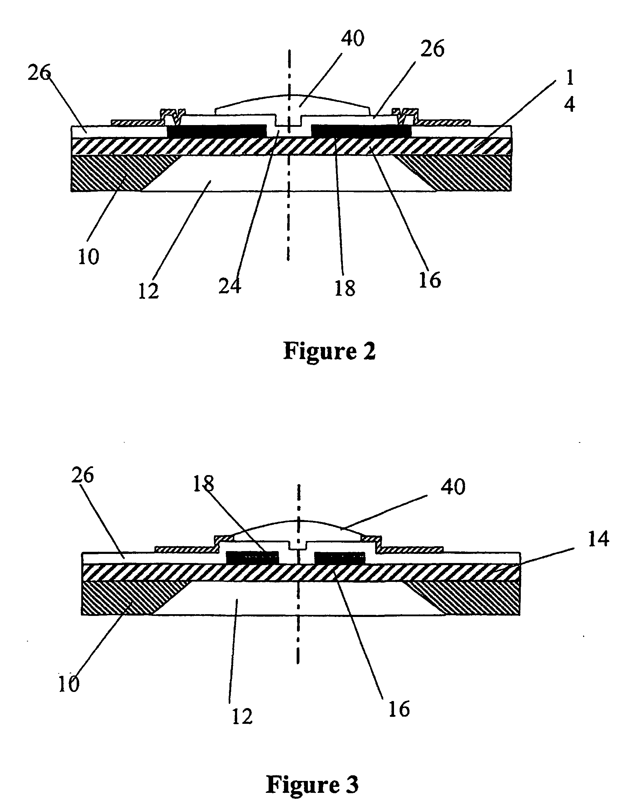

On se référera, tout d'abord, aux figures 1 à 3 qui montrent un cadre rectangulaire 10 en matériau semi-conducteur, tel que le silicium monocristallin, possédant une fenêtre centrale 12, également rectangulaire, dotée de deux axes de symétrie orthogonaux XX et YY. Typiquement, cette fenêtre a une longueur, selon XX, de 1 mm et une largeur, selon YY, de 0.75 mm.

Le cadre 10 est totalement recouvert d'une couche diélectrique en oxynitrure 14 dont la partie en regard de la fenêtre 12 forme une membrane 16. L'épaisseur de cette couche est de l'ordre de 2 µm.

La couche 14 est, elle-même, recouverte partiellement d'un corps de chauffe 18 formé d'une couche de silicium polycristallin rendu conducteur par dopage, par exemple, au moyen de phosphore. L'épaisseur de cette couche est d'environ 0,40 µm.

Le corps de chauffe 18 a la forme d'un papillon, avec les mêmes axes de symétrie XX et YY que l'ouverture 12 et la membrane 16. Il possède une partie centrale 20 et deux ailes latérales identiques 22.

La partie centrale 20 est rectangulaire. Sa largeur, selon YY, et sa longueur, selon XX, correspondent environ respectivement à la moitié de la largeur et de la longueur de la fenêtre 12. Elle est percée, en son centre, d'un trou carré 24 d'environ 100 µm de côté.

Les ailes 22 s'étendent, selon XX, en s'élargissant depuis la partie centrale 20 pour se terminer, au delà de la membrane 16, au-dessus du cadre 10, avec une extrémité de largeur maximale sensiblement égale à la largeur de la fenêtre 12. La longueur de chaque aile 22 est d'environ 280 µm.

On remarquera ainsi que, dans l'exemple de réalisation décrit, le corps de chauffe 18 dépasse de chaque côté de la membrane 16, par ses ailes 22, d'environ 80 µm.

Le tout est recouvert d'une couche d'isolation 26, par exemple, en oxyde ou nitrure de silicium, sur laquelle reposent, selon XX, deux pistes conductrices 28 et, selon YY, deux pistes conductrices 30.

Une extrémité de chaque piste 28 possède une plage de connexion 32, tandis que son autre extrémité 34 s'étend, au-dessus du cadre 10, tout au long de l'extrémité de l'aile 22 du corps de chauffe, qu'elle rejoint en traversant la couche d'isolation 26.

Une extrémité de chaque piste 30 possède également une plage de connexion 36, tandis que son autre extrémité 38 s'étend le long du bord de la partie centrale 20 du corps de chauffe sur une longueur sensiblement inférieure à la longueur de cette partie centrale. Typiquement, dans l'exemple décrit, l'extrémité 38 a une longueur d'environ 260 µm.

Finalement, le capteur selon l'invention comporte un élément sensible 40 disposé sur la couche d'isolation 26, au centre de la structure, de manière à ce que ses bords recouvrent également les extrémités 38 des pistes 30. Il recouvre, typiquement, environ la moitié de la surface de la partie centrale 20 de la couche conductrice. Cet élément sensible est constitué d'une couche d'oxyde métallique, par exemple du dioxyde d'étain, ayant une épaisseur de l'ordre de 1 µm et se présentant sous la forme d'une poudre agglomérée à structure poreuse constituée de particules sphériques possédant un diamètre de l'ordre de 20 nm.

On notera que les plages 32 servent à relier le corps de chauffe 18 à une source d'énergie électrique nécessaire à son alimentation, alors que les plages 36 servent à relier le capteur à une électronique de mesure de la résistance de l'élément sensible 40.

En variante, comme décrit dans le document PCT CH 00/00349 déjà cité, l'élément sensible 40 peut comporter une couche inférieure de dioxyde d'étain ayant une épaisseur comprise entre 50 et 300 nm et formée de grains ayant une dimension moyenne comprise entre 100 nm et 1 µm et une couche supérieure identique à la couche précédemment décrite, déposée sur la couche inférieure. Dans ce cas, les extrémités 38 des pistes 30 sont intercalées entre les bords des deux couches d'oxyde.

On se référera maintenant à la figure 4 qui montre, vue de dessus, une deuxième forme de réalisation avantageuse d'un capteur selon l'invention. Elle se distingue de la réalisation des figures 1 à 3 uniquement par le fait que les ailes 42 du corps de chauffe 18 se terminent à proximité des bords de la membrane 16 mais ne s'étendent pas au-delà. Les extrémités 34 des pistes 28 ne se trouvent donc pas exactement au-dessus du cadre 10 mais elles en restent très proches.

Ainsi est proposé, sous deux formes de réalisation, un capteur chimique de gaz à semi-conducteur qui présente la particularité, par rapport à la réalisation décrite dans le document EP 97102670 mentionné précédemment, d'être doté d'un corps de chauffe allongé en forme de papillon dont les contacts d'extrémités sont très proches du cadre. Il en résulte des avantages importants pour un capteur doté de tels perfectionnements.

En effet, les ailes du papillon permettent, par un effet d'entonnoir, de concentrer les lignes de courant du corps de chauffe sur sa partie centrale, percée et plus étroite, au-dessus de laquelle est situé l'élément sensible. Les essais ont montré que la température de ce dernier est ainsi rendue remarquablement uniforme.

De plus, le fait d'éloigner de la zone chaude centrale les contacts entre le corps de chauffe et ses pistes d'alimentation et de les rapprocher du cadre, moins chaud et possédant une bonne inertie thermique, réduit fortement la migration du silicium du corps de chauffe dans les pistes métalliques, responsable de la dégradation des contacts.

L'invention procure, par ailleurs, d'autres avantages, dont les deux principaux sont mentionnés ci-après:
- il devient possible de chauffer l'élément sensible, sans risque de dégradation des contacts, à des températures nettement supérieures à 400 °C, ce qui ouvre la porte à l'utilisation d'autres matériaux permettant la détection d'autres gaz;
- même si le capteur continue à travailler à une température aux environ de 400 °C, le fait qu'il supporte des températures plus élevées permet de réaliser in-situ la stabilisation de son élément sensible.

## Revendications

1. Capteur chimique de gaz à semi-conducteur comportant:
- un cadre (10) en matériau semi-conducteur, définissant une fenêtre rectangulaire (12) ayant deux axes de symétrie orthogonaux,
- une couche diélectrique (14) déposée sur cadre,
- une couche conductrice (18), formant corps de chauffe, déposée sur la couche diélectrique et percée d'une ouverture centrale (24),
- une couche isolante (26) déposée sur la couche conductrice,
- un élément sensible (40) déposé sur la couche isolante et recouvrant l'ouverture centrale de la couche conductrice, et
- deux pistes conductrices (28) couplées aux extrémités respectives de la couche conductrice,
**caractérisé en ce que** ladite couche conductrice (18), possédant les mêmes axes de symétrie que la fenêtre du cadre, a la forme d'un papillon, avec une partie centrale (20) comportant ladite ouverture (24) et deux ailes latérales identiques (22) allant en s'élargissant de la partie centrale pour se terminer à proximité du cadre.

2. Capteur selon la revendication 1, **caractérisé en ce que** ladite partie centrale (20) est rectangulaire, sa largeur et sa longueur correspondant environ respectivement à la moitié de la largeur et de la longueur de la fenêtre (12).

3. Capteur selon la revendication 2, **caractérisé en ce que** les extrémités desdites ailes (22) ont une largeur sensiblement égale à la dimension correspondante de la fenêtre (12).

4. Capteur selon la revendication 1, **caractérisé en ce que** lesdites ailes (22) se terminent au-dessus du cadre (10).

5. Capteur selon la revendication 1, **caractérisé en ce que** lesdites ailes (42) se terminent au-dessus de la fenêtre (12) mais toujours à proximité du cadre (10).

6. Capteur selon la revendication 1, **caractérisé en ce que** la fenêtre (12) a une longueur d'environ 1 mm et une largeur d'environ 0.75 mm.

7. Capteur selon la revendication 1, **caractérisé en ce que** ledit élément sensible (40) couvre sensiblement la moitié de la surface de la partie centrale (20) de la couche conductrice.

8. Capteur selon la revendication 1, **caractérisé en ce que** lesdites pistes conductrices (28) s'étendent sur les extrémités respectives desdites ailes (22).

9. Capteur selon la revendication 1, **caractérisé en ce que** l'ouverture centrale (24) de la couche conductrice a la forme d'un carré d'environ 100 µm de côté.

10. Capteur selon la revendication 1, **caractérisé en ce que** le cadre (10) est en silicium monocristallin.

11. Capteur selon la revendication 1, **caractérisé en ce que** la couche conductrice (18) est en silicium polycristallin rendu conducteur par dopage.

12. Capteur selon la revendication 1, **caractérisé en ce que** ledit élément sensible (40) est constitué d'une couche d'oxyde métallique sous la forme d'une poudre agglomérée à structure poreuse constituée de particules sphériques ayant un diamètre de l'ordre de 20 nm.

13. Capteur selon la revendication 1, **caractérisé en ce que** ledit élément sensible (40) est constitué d'une couche inférieure d'oxyde métallique formée de grains ayant une dimension moyenne comprise entre 100 nm et 1 µm et d'une couche supérieure couche d'oxyde métallique sous la forme d'une poudre agglomérée à structure poreuse constituée de particules sphériques ayant un diamètre de l'ordre de 20 nm.

14. Capteur selon l'une des revendications 12 et 13, **caractérisé en ce que** ledit oxyde est le dioxyde d'étain.

## Patentansprüche

1. Chemischer Halbleiter-Gassensor mit:
- einem Rahmen (10) aus halbleitendem Material, der ein rechteckiges Fenster (12) beschreibt und zwei rechtwinklige Symmetrieachsen aufweist,
- einer dielektrischen Schicht (14), die auf dem Rahmen aufliegt,
- einer Leitschicht (18), die einen Heizkorpus bildet und auf der dielektrischen Schicht aufliegt und die mit einer zentralen Öffnung (24) versehen ist,
- einer Isolierschicht (26), die auf der Leitschicht aufliegt,
- und einem empfindlichen Element (40), das auf der Isolierschicht aufliegt und die zentrale Öffnung der Leitschicht bedeckt und
- zwei Leitspuren (28), die mit den jeweiligen Enden der Leitschicht verbunden sind,
**dadurch gekennzeichnet, dass** die besagte Leitschicht (18) dieselben Symmetrieachsen besitzt wie das Fenster des Rahmens, in Form eines Schmetterlings, mit einem zentralen Teil (20), der die besagte Öffnung (24) umfasst und zwei identischen seitlichen Flügeln (22), die sich vom zentralen Bereich bis hin zur Umgebung des Rahmens erstrecken.

2. Sensor gemäß Anspruch 1, **dadurch gekennzeichnet, dass** der besagte zentrale Teil (20) rechteckig ist und seine Breite und Länge in etwa jeweils der Hälfte der Breite und Länge des Fensters (12) entsprechen.

3. Sensor gemäß Anspruch 2, **dadurch gekennzeichnet, dass** die Enden der besagten Flügel (22) eine Breite aufweisen, die eindeutig der entsprechenden Abmessung des Fensters (12) entspricht.

4. Sensor gemäß Anspruch 1, **dadurch gekennzeichnet, dass** die besagten Flügel (22) oberhalb des Rahmens (10) enden.

5. Sensor gemäß Anspruch 1, **dadurch gekennzeichnet, dass** die besagten Flügel (42) oberhalb des Fensters (12) enden, sich jedoch weiterhin in der Umgebung des Rahmens (10) befinden.

6. Sensor gemäß Anspruch 1, **dadurch gekennzeichnet, dass** das Fenster (12) etwa 1 mm lang und etwa 0,75 mm breit ist.

7. Sensor gemäß Anspruch, **dadurch gekennzeichnet, dass** das besagte empfindliche Element (40) eindeutig die Hälfte der Oberfläche des zentralen Teils (20) der Leiterschicht bedeckt.

8. Sensor gemäß Anspruch 1, **dadurch gekennzeichnet, dass** die besagten Leitspuren (28) sich bis zu den jeweiligen Enden der besagten Flügel (22) erstrecken.

9. Sensor gemäß Anspruch 1, **dadurch gekennzeichnet, dass** die zentrale Öffnung (24) der Leitschicht die Form eines Quadrats von etwa 100 µm pro Seite hat.

10. Sensor gemäß Anspruch 1, **dadurch gekennzeichnet, dass** der Rahmen (10) aus monokristallinem Silizium besteht.

11. Sensor gemäß Anspruch 1, **dadurch gekennzeichnet, dass** die Leitschicht (18) aus polykristallinem Silizium besteht, das durch Dotierung leitfähig gemacht wird.

12. Sensor gemäß Anspruch 1, **dadurch gekennzeichnet, dass** das besagte empfindliche Element (40) aus einer metallischen Oxidschicht in Form eines agglomerierten Pulvers mit poröser Struktur besteht, die wiederum aus sphärischen Partikeln mit einem Durchmesser von etwa 20 nm besteht.

13. Sensor gemäß Anspruch 1, **dadurch gekennzeichnet, dass** das besagte empfindliche Element (40) aus einer metallischen Oxidinnenschicht in Form von Körnen, die durchschnittliche Maße zwischen 100 nm et 1 µm aufweisen und aus einer metallischen Oxidoberschicht besteht, die die Form eines agglomerierten Pulvers mit poröser Struktur hat, die wiederum aus sphärischen Partikeln mit einem Durchmesser von etwa 20 nm besteht.

14. Sensor gemäß einem der Ansprüche 12 und 13, **dadurch gekennzeichnet, dass** es sich bei dem besagten Oxid um Zinkdioxid handelt.

## Claims

1. Semiconductor-based chemical gas sensor comprising:
- a frame (10) made of semiconductor material, defining a rectangular window (12) having two orthogonal axes of symmetry;
- a dielectric layer (14) deposited on the frame;
- a conducting layer (18), forming a heater, deposited on the dielectric layer and pierced by a central aperture (24);
- an insulating layer (26) deposited on the conducting layer;
- a sensitive element (40) deposited on the insulating layer and covering the central aperture of the conducting layer; and
- two conducting tracks (28) coupled to the respective ends of the conducting layer;
**characterized in that** the said conducting layer (18), possessing the same axes of symmetry as the window of the frame, is in the form of a butterfly, with a central portion (20) that includes the said aperture (24) and two identical side wings (22) that broaden out from the central portion before terminating near the frame.

2. Sensor according to Claim 1, **characterized in that** the said central portion (20) is rectangular, its width and its length corresponding to approximately half the width and half the length of the window (12), respectively.

3. Sensor according to Claim 2, **characterized in that** the ends of the said wings (22) have a width substantially equal to the corresponding dimension of the window (12).

4. Sensor according to Claim 1, **characterized in that** the said wings (22) terminate above the frame (10).

5. Sensor according to Claim 1, **characterized in that** the said wings (42) terminate above the window (12) but are still near the frame (10).

6. Sensor according to Claim 1, **characterized in that** the window (12) has a length of about 1 mm and a width of about 0.75 mm.

7. Sensor according to Claim 1, **characterized in that** the said sensitive element (40) covers substantially half the area of the central portion (20) of the conducting layer.

8. Sensor according to Claim 1, **characterized in that** the said conducting tracks (28) extend onto the respective ends of the said wings (22).

9. Sensor according to Claim 1, **characterized in that** the central aperture (24) of the conducting layer is in the form of a square with sides of about 100 µm.

10. Sensor according to Claim 1, **characterized in that** the frame (10) is made of single-crystal silicon.

11. Sensor according to Claim 1, **characterized in that** the conducting layer (18) is made of polycrystalline silicon made conductive by doping.

12. Sensor according to Claim 1, **characterized in that** the said sensitive element (40) is formed from a layer of metal oxide in the form of an agglomerated powder with a porous structure, consisting of spherical particles having a diameter of around 20 nm.

13. Sensor according to Claim 1, **characterized in that** the said sensitive element (40) is formed from a lower layer of metal oxide formed from particles having a mean size of between 100 nm and 1 µm and from an upper layer of metal oxide in the form of an agglomerated powder with a porous structure, consisting of spherical particles having a diameter of around 20 nm.

14. Sensor according to either of Claims 12 and 13, **characterized in that** the said oxide is tin dioxide.
